# EUROPEAN PATENT APPLICATION

(11) **EP 3 696 656 A1**
(43) Date of publication of application: **19.08.2020**
(21) Application number: 20156642.9
(22) Date of filing: 11.02.2020
(51) Int. Cl.: G06F 3/0484, G06F 3/0488

(54) **DISPLAY AND INPUT MIRRORING ON HEADS-UP DISPLAY**

(30) Priority: 12.02.2019 US 201916273832
(71) Applicant: VOLVO CAR CORPORATION, 405 31 Göteborg (SE)
(72) Inventor: Strandberg, Mats, 418 71 Göteborg (SE)
(74) Representative: Nederlandsch Octrooibureau

(57) **Abstract**

A system as described herein includes an interface and one or more processors. The one or more processors are configured to determine if a user interaction with an interaction area of a first graphical user interface presented by a first display device corresponds to a selection input. Responsive to determining that user interaction does not correspond to the selection input, the one or more processors are configured to generate information to cause a second display device different than the first display device to present a second graphical user interface comprising at least a portion of the first graphical user interface that includes the interaction area within the first graphical user interface.

## Description

### TECHNICAL FIELD

This disclosure relates to user interface control.

### BACKGROUND

Touchscreens as input devices are, by their very nature, not tactile in the way that a user can navigate the touchscreen to find the correct input area. In other words, given the uniformity of the touchscreen surface, there is no physical indicator of where the user's input tool (e.g., the user's finger, a stylus, or a touchpad pointer) is located with respect to elements of the graphical user interface. Instead, to find the correct area of the touchscreen to press in order to activate the desired function, one must look at the screen to navigate their input tool to the correct input area before activating the desired graphical element.

### SUMMARY

Touchscreens are implemented in many modern personal passenger vehicles as a main form of input with navigation and entertainment systems. These touchscreens are typically located in a dashboard centerstack of the vehicle. However, this means that, if the user of the touchscreen is the driver of the vehicle, the driver must look away from the road and look at the dashboard centerstack of the vehicle in order to navigate the user interface of the touchscreen. This may reduce driving safety.

In accordance with the techniques of this disclosure, an input device of a first display device (e.g., a touchscreen) may use a variety of sensors (e.g., a pressure sensors or proximity sensors) when receiving user inputs or user interactions. If the input device receives an indication of a user interaction that characteristically matches a selection input (e.g., the pressure sensors detect an input with a pressure level above a threshold pressure level or the proximity sensors detect contact between the interface and the input tool), the input device may treat the user interaction like a traditional user interaction of selecting a graphical element. Conversely, if the input device receives user interaction that does not characteristically match the selection input (e.g., the pressure sensors detect an input with a pressure level below the threshold pressure level or the proximity sensors detect that the input tool is positioned close to, but not in contact with, the interface), at least a portion of the user interface of the first display device may be reproduced on a second, different display device (e.g., a heads-up display) with some indication of what portion of the first display device the input would activate if the input were to change to characteristically match the selection input, as the input is indicative of a user searching for a user interface element to select. For example, the second display device could superimpose a graphical element on the reproduction of the user interface at a location corresponding to the user interaction, the second display device could reproduce a portion of the user interface as a zoomed-in or reduced view of the user interface centered around the location corresponding to the user interaction, or some combination of the two. While the input remains not matching the selection input, the second display device may continue to reproduce the user interface, dynamically updating as the user moves the input tool around the input device of the first display device to provide the user with an indication of the updated location of the input tool.

In environments where the first display device is not in a location that is convenient for the user to visually monitor, the techniques described herein may mirror at least a portion of the user interface of the first display device on a second display device that may be in a more convenient and safe location for the user to see. For instance, in the example of the passenger vehicle including a touchscreen in the dashboard centerstack, rather than forcing the driver to take their eyes off of the road to look at the touchscreen when the user wants to provide input to the systems controlled by the touchscreen, the user interface may be reproduced on a second display device in a safer location that is also more convenient for the user to look at while they are driving, such as in a heads up display on the dashboard panel or on a projection on the vehicle's windshield in front of the driver. This improved graphical user interface system may improve driver safety, decrease the amount of time it takes for a user to locate graphical elements in the user interface that they wish to interact with, and decrease the amount of errant user interactions provided to the system.

In one example, a method includes, determining if a user interaction with an interaction area of a first graphical user interface presented by a first display device corresponds to a selection input, and responsive to determining that user interaction does not correspond to the selection input, generating information to cause a second display device to present a second graphical user interface comprising at least a portion of the first graphical user interface that includes the interaction area within the first graphical user interface.

In another example, a device includes an interface and one or more processors configured to determine if a user interaction with an interaction area of a first graphical user interface presented by a first display device corresponds to a selection input, and responsive to determining that user interaction does not correspond to the selection input, generate information to cause a second display device to present a second graphical user interface comprising at least a portion of the first graphical user interface that includes the interaction area within the first graphical user interface.

In an embodiment of the device, the interaction area comprises a first interaction area, wherein the portion of the first graphical user interface comprises a first portion of the first graphical user interface, and wherein the one or more processors are further configured to: while receiving the indication of the user interaction, and while the user interaction does not correspond to the selection input: receive an indication of a movement of the user interaction to a second interaction area of the first graphical user interface; and generate updated information that causes the second display device to present, in the second graphical user interface, at least a second portion of the first graphical user interface that includes the second interaction area of the first graphical user interface. The one or more processors can be further configured to: responsive to determining that the user interaction does not correspond to the selection input, generate information to cause the second display device to present, in the second graphical user interface, a graphical indicator superimposed on top of the second graphical user interface at a dynamic location within the second graphical user interface that corresponds to the movement of the user interaction from the first interaction area within the first graphical user interface to the second interaction area within the first graphical user interface.

In a further embodiment, the one or more processors are configured to determine if the user interaction corresponds to the selection input comprise the one or more processors being configured to: determine a pressure level of the user interaction; responsive to determining that the pressure level of the user interaction is less than a pressure threshold level, determine that the user interaction does not correspond to the selection input; and responsive to determining that the pressure level of the user interaction is greater than the pressure threshold level, determine that the user interaction corresponds to the selection input.

In an embodiment, the one or more processors are configured to determine if the user interaction corresponds to the selection input comprise the one or more processors being configured to: determine and using one or more proximity sensors, if the user interaction is in contact with an input device or hovering above the input device; responsive to determining that the user interaction is hovering above the input device, determine that the user interaction does not correspond to the selection input; and responsive to determining that the user interaction is in contact with the input device, determine that the user interaction corresponds to the selection input.

In another example, a non-transitory computer-readable storage medium stores instructions that, when executed by one or more processors, cause the one or more processors to determine if a user interaction with an interaction area of a first graphical user interface presented by a first display device corresponds to a selection input, and responsive to determining that user interaction does not correspond to the selection input, generate information to cause a second display device to present a second graphical user interface comprising at least a portion of the first graphical user interface that includes the interaction area within the first graphical user interface.

In another example, a device includes means for determining if a user interaction with an interaction area of a first graphical user interface presented by a first display device corresponds to a selection input, and means for generating information to cause a second display device to present a second graphical user interface comprising at least a portion of the first graphical user interface that includes the interaction area within the first graphical user interface.

In another example, a system includes a first display device, a second display device different than the first display device, and one or more processors configured to receive an indication of user interaction with an interaction area of a first graphical user interface presented by the first display device, determine if the user interaction corresponds to a selection input, and, responsive to determining that user interaction does not correspond to the selection input, generate information to cause the second display device to present a second graphical user interface comprising at least a portion of the first graphical user interface that includes the interaction area within the first graphical user interface.

The details of one or more examples of the disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 is a block diagram illustrating an example vehicle system that mirrors at least a portion of a user interface from a first display device onto a second display device, in accordance with one or more aspects of the present disclosure.
FIG. 2 is a block diagram illustrating an example vehicle information system that mirrors at least a portion of a user interface from a first display device onto a second display device, in accordance with one or more aspects of the present disclosure.
FIG. 3 is a conceptual diagram illustrating a first display device that receives user interactions and a second display device that mirrors at least a portion of a user interface of the first display device based on a received indication of user interaction, in accordance with one or more aspects of the present disclosure.
FIG. 4 is a conceptual diagram illustrating a first display device that receives user interactions and a second display device that mirrors at least a portion of a user interface of the first display device based on a received indication of user interaction, in accordance with one or more aspects of the present disclosure.
FIG. 5 is a conceptual diagram illustrating a first display device that receives user interactions and a second display device that mirrors at least a portion of a user interface of the first display device based on a received indication of user interaction, in accordance with one or more aspects of the present disclosure.
FIG. 6 is a flowchart illustrating example operations of an example vehicle information system that mirrors at least a portion of a user interface from a first display device onto a second display device, in accordance with one or more aspects of the present disclosure.

### DETAILED DESCRIPTION

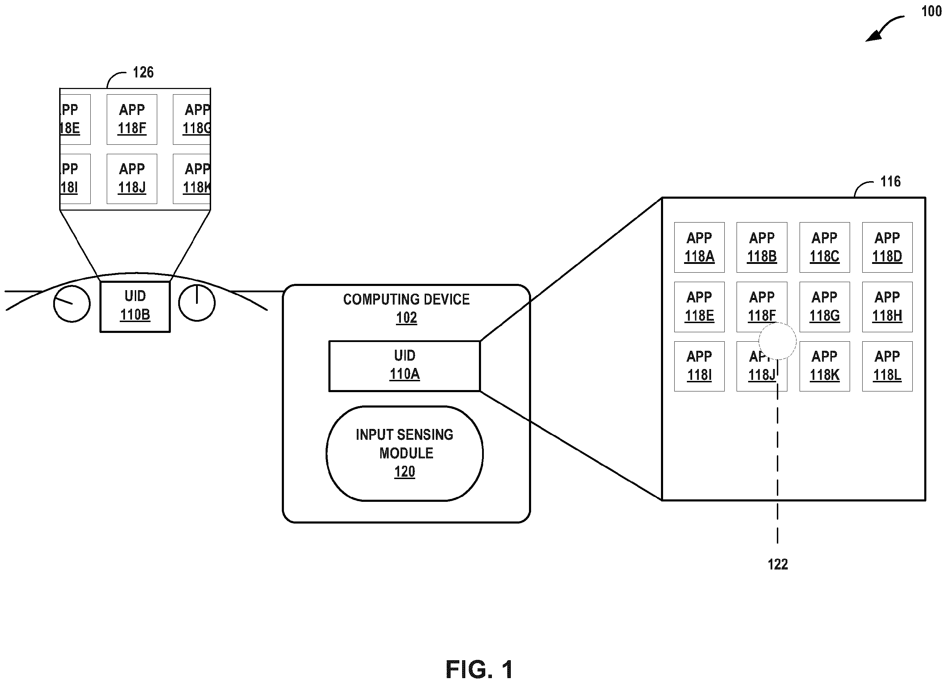

FIG. 1 is a conceptual block diagram illustrating an example vehicle information system that mirrors at least a portion of a user interface from a first display device onto a second display device, in accordance with one or more aspects of the present disclosure. Vehicle 100 may include any type of autonomous, semi-autonomous, or non-autonomous vehicle. Examples of vehicle 100 include cars, trucks, buses, motorcycles, recreational vehicles (RVs), tractors, all-terrain vehicles, watercraft, or any other type of vehicle.

Computing device 102 may be configured to provide information to occupants of vehicle 100. For example, computing device 102 may execute applications that provide information to the occupants of the vehicle, such as vehicle information (e.g., speed, RPMs, fuel indicators), traffic and/or navigation information, multimedia information (e.g., audio and/or video), among others. In the example of FIG. 1, computing device 102 includes one or more user interface devices 110 and input sensing module 120.

User interface devices (UIDs) 110A-110B (collectively, UIDs 110) may enable an occupant of vehicle 100 to interact with computing device 102. UIDs 110 may function as an input device and/or an output device for computing device 102. In instances where UIDs 110 function as input devices, UIDs 110 may include touch-sensitive input devices, presence-sensitive input devices, track pads, microphones, physical buttons or knobs, infrared sensors, among others. In instances where UIDs 110 function as an output device, UIDs 110 may include display devices, speakers, haptic feedback technologies, among others. Display devices may include touchscreens (e.g., capacitive or resistive). Example display devices include liquid crystal displays (LCD), light emitting diode (LED) displays, organic light-emitting diode (OLED) displays, e-ink, or other device configured to display information to an occupant of vehicle 100. In instances where UIDs 110 function as both input and output devices, UIDs 110 may include any combination of input and output devices described above. As illustrated in the example of FIG. 1, UID 110A is a presence-sensitive input device (e.g., a touchscreen display) located in a center console or a centerstack of vehicle 100 and UID 110B is located in a dashboard of vehicle 100. In another example, UIDs 110 may be located in a heads-up display (e.g., UID 110B may be a projector in the dashboard of vehicle 100 that outputs a projection onto a windshield of vehicle 100), a mirror (e.g., a rear-view mirror or a side mirror), a head rest, among other locations.

UID 110A may display user interface 116 due to information generated by computing device 102. User interface 116 is a graphical user interface that includes textual and graphical elements associated with functionality of one or more applications executing at computing device 102. In various examples, a user may provide a user interaction that corresponds to a location of user interface 116 at which a textual or graphical element is located. UID 110A may provide an indication of the location of the user interaction to the corresponding application associated with the selected element. In this way, user interface 116 may enable a user to provide inputs to and control the operation of applications executing at computing device 102.

Input sensing module 120 may perform operations in accordance with one or more aspects of this disclosure. Input sensing module 120 may perform the operations described using hardware, firmware executing on hardware, software executing on hardware, or a combination thereof. Computing device 102 may execute input sensing module 120 using one or more processing units.

In accordance with techniques of this disclosure, input sensing module 120 may generate information that causes a first display device to present user interface 116. In the example of FIG. 1, user interface 116 may be a home screen for an operating system of computing device 102 enabling the user to select any of applications 118A-118L (collectively, "applications 118"). Similar techniques to those described herein may be applied, however, to any user interface output on UID 110A, such as user interfaces output onto UID 110A during the execution of any of applications 118.

Input sensing module 120 may receive an indication of user interaction interacting with interaction area 122 within user interface 116. As shown in FIG. 1, the user may use an input tool, such as the user's finger, a stylus, or a touchpad, to attempt to interact with interaction area 122. For instance, when UID 110A is a touchscreen with pressure sensors, the user may place a stylus or their finger on interaction area 122 in an attempt to interact with graphical elements in user interface 116, such as any of the icons for applications 118. In other instances, when UID 110A is a touchscreen with proximity sensors, the user may place a stylus or their finger in close proximity to UID 110A without touching UID 110A with their finger of the stylus.

UID 110A may determine if the user interaction corresponds to a selection input. Some examples of these techniques include utilizing one or more pressure sensors in UID 110A that can measure a pressure of the user interaction interacting with interaction area 122. Using these measurements, input sensing module 120 may determine a pressure level of the user interaction. Given that, in the example of UID 110A being a touchscreen, it may be difficult to discern between attempts to interact with graphical elements and attempts to locate where the input tool is located in the user interface, input sensing module 120 may utilize the pressure sensors as one method of discerning between the two intentions.

In other examples, UID 110A may include proximity sensors. Input sensing module 120 may utilize these proximity sensors to sense the input tool hovering close to UID 110A but not in contact with UID 110A. In such examples, input sensing module 120 may classify the hovering action as an intent to determine a location of the input tool with respect to user interface 116, while input sensing module 120 may classify the user touching UID 110A with the input tool as a selection input.

Responsive to determining that the user interaction does not correspond to the selection input, input sensing module 120 may generate information that causes UID 110B to present user interface 126. User interface 126 may include at least a portion of user interface 116 that includes interaction area 122 from user interface 116. For instance, upon the user placing the input tool on interaction area 122 of user interface 116 at a pressure less than the threshold pressure level, input sensing module 120 may gather the portion of user interface 116 corresponding to interaction area 122, as well as some of the surrounding portions of user interface 116, and output those portions as user interface 126 in UID 110B.

Conversely, responsive to determining that the user interaction is the selection input, input sensing module 120 may select a graphical user face element associated with interaction area 122 within user interface 116. For instance, interaction area 122 may be most closely corresponding to an icon for application 118J. As such, input sensing module 120 may treat the user interaction as a selection of the graphical element associated with application 118J.

The techniques described herein may also utilize alternate methods for discerning between the two intentions. For instance, a length of time that the input tool is in contact with UID 110A may be used by input sensing module 120 to discern between attempts to interact with graphical elements and attempts to locate where the input tool is located in the user interface. In this way, if the input tool is in contact with UID 110A briefly, input sensing module 120 may classify the input as an attempt to interact with a graphical element associated with interaction area 122. Conversely, if the input tool is in contact with UID 110A for longer than a threshold time, input sensing module 120 may classify the input as an attempt to locate where the input tool is located in the user interface and follow the techniques described herein of outputting at least a portion of user interface 116 on UID 110B in user interface 126. Once input sensing module 120 determines that the input tool is no longer in contact with UID 110A, input sensing module 120 may select a graphical element associated with the final interaction area once the input tool is separated from UID 110A.

In environments where the first display device is not in a location that is convenient for the user to visually monitor, such as the example of vehicle 100 of FIG. 1 where UID 110A is located on a center console of vehicle 100, mirroring at least a portion of user interface 116 of UID 110A on UID 110B, as UID 110B may be in a more convenient and safe location for the user to see. Rather than forcing the driver to take their eyes off of the road to look at UID 110A when the user wants to provide input to the systems controlled by UID 110A, user interface 116 may be reproduced on UID 110B in a safer location that is also more convenient for the user to look at while they are driving, such as in a heads up display on the dashboard panel or on a projection on the vehicle 100's windshield in front of the driver. This improved graphical user interface system may improve driver safety, decrease the amount of time it takes for a user to locate graphical elements in the user interface that they wish to interact with, and decrease the amount of errant user interactions provided to the system.

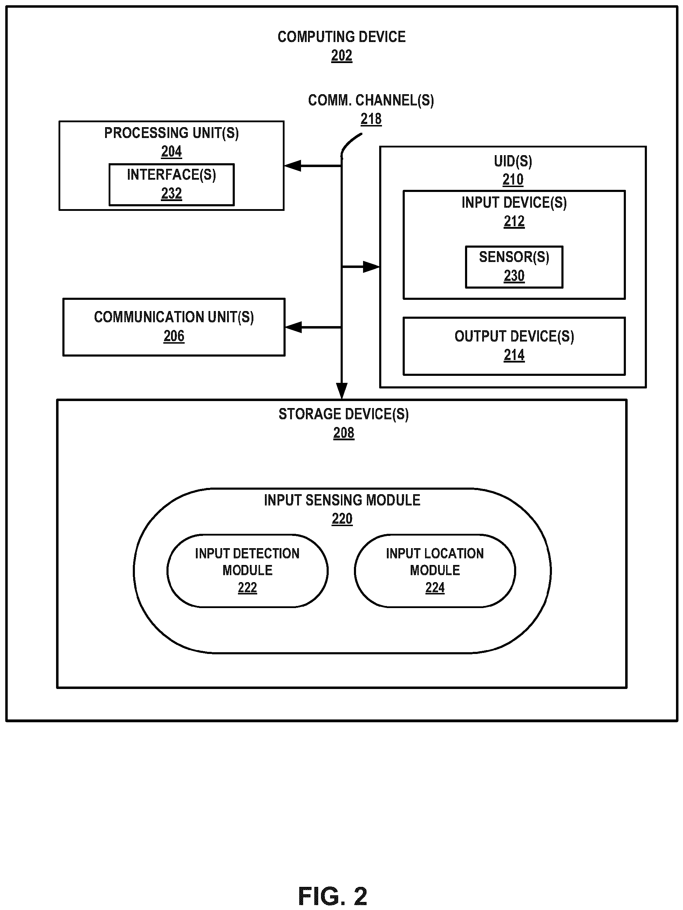

FIG. 2 is a block diagram illustrating an example vehicle information system that is configured to mirror at least a portion of a user interface from a first display device onto a second display device, in accordance with one or more aspects of the present disclosure. Computing device 202 is a more detailed example of computing device 102 of FIG. 1. As illustrated in FIG. 2, computing device 202 includes at least one processing unit 204, at least one communication unit 206, at least one storage device 208, at least one user interface device 210, and at least one communication channel 218. FIG. 2 illustrates only one particular example of computing device 202, and many other examples of computing device 202 may be used in other instances and may include a subset of the components included in example computing device 202 or may include additional components not shown in FIG. 2.

Communication channels 218 may interconnect each of components 204, 206, 208, and/or 210 for inter-component communications (physically, communicatively, and/or operatively). In some examples, communication channels 218 may include a system bus, a network connection, one or more inter-process communication data structures, or any other components for communicating data.

User interface devices (UID) 210 may enable a user (e.g., an occupant of vehicle 100 of FIG. 1) to interact with computing device 202. UIDs 210 may include one or more input devices 212 and/or more output devices 214. Examples of input devices 212 include display devices, microphones, physical buttons or knobs, touchscreens, or touchpads, among others.

Input devices 212 may also include one or more sensors 230 (hereinafter, "sensors 230), such as pressure sensors, proximity sensors, or timing sensors, to measure various aspects of user interaction received at input devices 212. In the example where sensors 230 include pressure sensors, sensors 230 may determine a pressure level of a user interaction with input devices 212 upon sensing a user interaction that exerts some level of pressure onto input devices 212.

In examples where sensors 230 include proximity sensors, sensors 230 may be configured to detect whether an input tool is physically in contact with input devices 212 or merely in close proximity to input devices 212. For instance, proximity sensors may include one or more of inductive sensors, capacitive sensors, photoelectric sensors, or ultrasonic sensors. Inductive sensors detect ferrous targets, where sensors 230 would create a magnetic field emitting from input devices 212 that reduces the oscillation amplitude as the ferrous target get closer and closer to input devices 212, until the magnetic field collapses upon physical contact. Capacitive sensors can detect both metal and non-metal targets by emitting an electrostatic field as opposed to an electromagnetic field. Upon entering the electrostatic field, the target changes a capacitance of the oscillator circuit, indicating the presence of the target. Other proximity sensors use similar technology but with different emissions, such as ultrasonic emissions or photoelectric emissions.

Examples of output devices 214 include display devices and speakers, among others. Display devices may include touchscreens (e.g., capacitive or resistive). Example display devices include liquid crystal displays (LCD), light emitting diode (LED) displays, organic light-emitting diode (OLED) displays, e-ink, or other device configured to display information to a user. In the example of FIG. 2, UIDs 210 may include at least two display devices. A first display device of the at least two display devices may be a presence-sensitive input/output device, and a second display device of the at least two display devices may be a heads-up display device separate from the presence-sensitive input/output device, such as a display located in a dashboard of a vehicle that includes computing device 202 or a projector that outputs a projection onto a windshield of the vehicle that includes computing device 202.

Communication units 206 may communicate with one or more other computing devices by transmitting and/or receiving data. Communications units 206 may include wired and/or wireless communication units. Examples of wired communication units 206 include Universal Serial Bus (USB) transceivers. Examples of wireless communication units 206 include GPS radios, cellular (e.g., LTE) radios, Bluetooth™ radios, WiFi™ radios, or any other wireless radios.

Processing units 204 may be implemented as fixed-function processing circuits, programmable processing circuits, or a combination thereof. Fixed-function circuits refer to circuits that provide particular functionality and are pre-set on the operations that can be performed. Programmable circuits refer to circuits that can programmed to perform various tasks and provide flexible functionality in the operations that can be performed. For instance, programmable circuits may execute software or firmware that cause the programmable circuits to operate in the manner defined by instructions of the software or firmware. Fixed-function circuits may execute software instructions (e.g., to receive parameters or output parameters), but the types of operations that the fixed-function processing circuits perform are generally immutable. In some examples, the one or more of the units may be distinct circuit blocks (fixed-function or programmable), and in some examples, the one or more units may be integrated circuits.

Processing units 204 may also include one or more interfaces 232. Interfaces 232 may include peripheral interfaces that enable processing units 204 to communicate with other components, such as input devices 212, output devices 214, and storage device 208. Interfaces 232 may be implemented as software interfaces that can interpret the bitstreams received from the other components, or as hardware interfaces that can receive and process the signals received from the other components.

In some examples, storage device 208 may be a temporary memory, meaning that a primary purpose of storage device 208 is not long-term storage. Storage device 208 may be configured for short-term storage of information as volatile memory and therefore not retain stored contents if powered off. Examples of volatile memories include random access memories (RAM), dynamic random-access memories (DRAM), static random-access memories (SRAM), and other forms of volatile memories known in the art.

Storage device 208 may include one or more non-transitory computer-readable storage devices. Storage device 208 may be configured to store larger amounts of information than typically stored by volatile memory. Storage device 208 may further be configured for long-term storage of information as non-volatile memory space and retain information after power on/off cycles. Examples of non-volatile memories include magnetic hard discs, optical discs, flash memories, or forms of electrically programmable memories (EPROM) or electrically erasable and programmable (EEPROM) memories. Storage device 208 may store program instructions and/or information (e.g., data) that, when executed, cause processing unit 204 to perform the techniques of this disclosure. For example, storage device 208 may include data or information associated with input sensing module 220, input detection module 222, and input location module 224.

In accordance with techniques of this disclosure, input sensing module 220 may generate information that causes a first display device of UIDs 210 to generate a first graphical user interface. In the example of FIG. 2, the first graphical user interface may be a home screen for an operating system of computing device 202 enabling the user to select an application executable by processing units 204, a user interface output during the execution of any of the applications, or any other user interface that could receive user interactions to navigate the executing program or complete a function.

Input detection module 222 may receive an indication of user interaction interacting with an interaction area within the first graphical user interface. The user may use an input tool, such as the user's finger, a stylus, or a touchpad, to attempt to interact with the interaction area in the first graphical user interface. For instance, when the first display device of UIDs 210 is a touchscreen, the user may place their finger on the interaction area in an attempt to interact with graphical elements in the user interface.

As described above, input devices 212 may include sensors 230 that can measure various aspects of the user interaction interacting with the interaction area in the first display device of UIDs 210. Using these measurements, input detection module 222 may determine if the user interaction corresponds with a selection input. Given that, in the example of the first display device of UIDs 210 being a touchscreen, it may be difficult to discern between attempts to interact with graphical elements and attempts to locate where the input tool is located in the user interface, input detection module 222 may utilize sensors 230 to discern between the two intentions.

In some examples sensors 230 may include pressure sensors. In such instances, input detection module 222 may utilize a pressure level of the user interaction to determine whether the user interaction is a selection input or an input to determine the location of the input tool with respect to the first graphical user interface. For instance, if input detection module 222 determines that a pressure level of the user interaction is greater than a pressure level threshold, input detection module 222 may classify the interaction as a selection input. Conversely, if input detection module 222 determines that a pressure level of the user interaction is less than the pressure level threshold, input detection module 222 may not classify the interaction as a selection input and instead classify the interaction as an input to determine the location of the input tool with respect to the first graphical user interface.

In other examples, sensors 230 may include proximity sensors. In such instances, input detection module 222 may utilize these proximity sensors to sense the input tool hovering close to input devices 212 but not in contact with input devices 212. For instance, if input detection module 222 determines that the input tool for the user interaction is in contact with input devices 212, input detection module 222 may classify the interaction as a selection input. For the purposes of this disclosure, "in contact" may be synonymous with "within a threshold distance of." Conversely, if input detection module 222 determines that the input tool for the user interaction is not in contact with input devices 212 but is instead only in close proximity to input devices 212, input detection module 222 may not classify the interaction as a selection input and instead classify the interaction as an input to determine the location of the input tool with respect to the first graphical user interface. For the purposes of this disclosure, "in close proximity to" may be synonymous with "outside of the threshold distance interpreted to be contact but within a second threshold distance where the input tool can be sensed by input devices 212."

Responsive to determining that the user interaction does not correspond to the selection input, input location module 224 may generate information that causes a second display device of UIDs 210 to present a second graphical user interface. The second graphical user interface may include at least a portion of the first graphical user interface that includes the interaction area from the first graphical user interface. In some examples, the second display device may include a default graphical user interface, which may include such information as a current speed of the vehicle, a direction the vehicle is facing, a gas mileage indicator for the vehicle, navigational information, or any other information that may be useful for a driver of a vehicle while they are operating the vehicle. In causing the second display device to present the second graphical user interface, input location module 224 may cause the second display device to cease the output of the default graphical user interface for the second display device and cause the second display device to present, for display, the second graphical user interface in place of the default graphical user interface.

In some examples, in addition to causing the second display device to present at least the portion of the first graphical user interface, input location module 224 may also generate information that causes the second display device to present, in the second graphical user interface, a graphical indicator of the interaction area superimposed on top of the second graphical user interface at a location within the second graphical user interface that corresponds to the interaction area within the first graphical user interface. This graphical indicator may be a circle representing the interaction area, a crosshair representing the interaction area, or any other additional graphical element that effectively represents the current interaction area if the user were to exceed the threshold pressure level with the input tool on the first display device of UIDs 210. In some instances, the portion of the first graphical user interface output in the second graphical user interface is an entirety of the first graphical user interface, with the graphical indicator shown in the second graphical user interface mirroring the motions of the input tool on the first display device.

In some examples, the portion of the first graphical user interface included in the second graphical user interface is less than an entirety of the first graphical user interface. In other words, the second graphical user interface may provide a zoomed-in view or reduced of the interaction area, potentially with the area surrounding the interaction area included in the second graphical user interface. In such examples, in addition to or in place of the graphical indicator representing the interaction area, a center of the portion of the first graphical user interface included in the second graphical user interface is a same pixel as a center of the interaction area within the first graphical user interface. In this way, the user may use the center of second graphical user interface as an indication of where the input tool is located with respect to the first graphical user interface to assist the user in providing correct inputs within the first graphical user interface on the first display device of UIDs 210.

Conversely, responsive to determining that the user interaction does correspond to the selection input, input location module 224 may select a graphical user face element associated with the interaction area within the first graphical user interface. For instance, using the example of FIG. 1, interaction area 122 may be most closely corresponding to a button for executing a function within an application executable by processing units 204. As such, input location module 224 may treat the user interaction as a selection of the graphical element associated with application 118J.

In some examples, the interaction area may be a first interaction area, and the portion of the first graphical user interface may be a first portion of the first graphical user interface. In such examples, while receiving the indication of the user interaction, input detection module 222 may receive an indication of a movement of the user interaction to a second interaction area within the first graphical user interface. In such instances, input location module 224 may generate updated information that causes the second display device to present an update the second graphical user interface that includes at least a second portion of the first graphical user interface that includes the second interaction area within the first graphical user interface. In other words, the user may realize that the input tool is not in the correct location to make the user's desired selection within the first graphical user interface. Instead of forcing the user to look at the first display device to locate the actual desired location for the user's input, the user may slide the input tool across the first display device, either in light contact with the first display device or in close proximity to the first display device, with the second graphical user interface updating dynamically as the input tool's location moves across the first display device such that the second graphical user interface always shows the current interaction area within the first graphical user interface as the input tool moves around the first display device and changes interaction areas.

This movement may be shown with the superimposed graphical indicator described above. For instance, responsive to determining that the pressure level of the user interaction is below the threshold pressure level, input location module 224 may generate information that causes the second display device to present, in the second graphical user interface, a graphical indicator superimposed on top of the second graphical user interface at a dynamic location within the second graphical user interface that corresponds to the movement of the user interaction from the first interaction area within the first graphical user interface to the second interaction area within the first graphical user interface. This may further assist the user in determining when the input tool is in the correct location to select the desired graphical element in the first graphical user interface, enabling the user to make such a selection without looking at the first display device.

In some examples where the input tool may move across the first display device in search of the desired input location, the first portion of the first graphical user interface included in the second graphical user interface is less than an entirety of the first graphical user interface. In such examples, a center of the first portion of the first graphical user interface included in the second graphical user interface is a same pixel as a center of the first interaction area within the first graphical user interface, and a center of the second portion of the first graphical user interface included in the updated second graphical user interface is a same pixel as a center of the second interaction area within the first graphical user interface. In other words, as the input tool moves around the first display device and the first graphical user interface, the second graphical user interface may be output such that the center of the second graphical user interface is the center of the current interaction area as the input tool moves across the first display device.

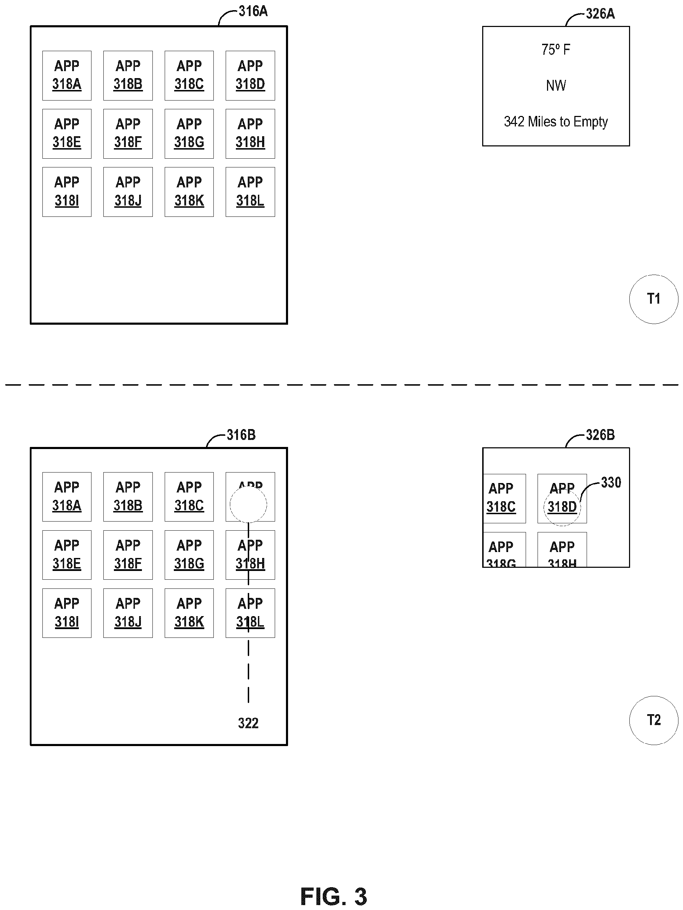

FIG. 3 is a conceptual block diagram illustrating a first display device that receives user interactions and a second display device that mirrors at least a portion of a user interface of the first display device based on a received indication of user interaction, in accordance with one or more aspects of the present disclosure.

In the example of FIG. 3, user interfaces 316A and 316B may be output on a first display device, such as UID 110A of FIG. 1, due to information generated by a computing device, such as computing device 102 of FIG. 1. Further, user interface 326Aand 326B may be output on a second display device, such as UID 110B of FIG. 1, due to information generated by a computing device, such as computing device 102 of FIG. 1. The first display device may be a presence-sensitive input/output device, and the second display device may be a heads-up display device separate from the presence-sensitive input/output device. As such, user interface 316A may be an interactive user interface, but located on a device that is unsafe for the user when the user is a driver who would have to take their eyes off of the road to look at user interface 316A. Further, user interfaces 326A and 326B may be output for display at a location that would limit the amount of eye movement required for the user to view user interfaces 326A and 326B, including a dashboard panel or a projection onto the windshield of the vehicle. This would enable the user to precisely navigate user interface 316A without the user having to avert their eyes from the road while navigating their vehicle.

As shown in FIG. 3, at time T1, user interface 316A includes a home screen for an operating system of a computing device, including icons for applications 318A-318L (collectively, "applications 318"). User interface 326Amay include a default graphical user interface, which includes temperature information, a direction a vehicle including the display devices is facing, and a predicted travel distance on the vehicle's current gasoline levels.

At time T2, the system may receive an indication of user interaction at interaction area 322 of user interface 316B. As such, one or more processors of the system may cease the output of user interface 326A and output user interface 326B in place of user interface 326A. As shown in FIG. 3, user interface 326B includes a portion of user interface 316B that includes interaction area 322. In this example, the portion of user interface 316B included in user interface 326B is less than an entirety of user interface 316B. A center of the portion of user interface 316B included in user interface 326B is a same pixel as a center of interaction area 322 within user interface 316B, meaning that user interface 326B is centered around interaction are 322.

Also shown in user interface 326B is graphical indicator 330. Graphical indicator 330 represents interaction area 322 of user interface 316B and is superimposed on top of user interface 326B at a location within user interface 326B that corresponds to interaction area 322 within user interface 316B. As such, when viewing user interface 326B, the user is aware of what would be selected if the user were to separate the input tool from the first display device, if the user were to force the input tool to make contact with the first display device, or if the pressure of the user interaction begins to exceed the threshold pressure value. While shown as a dotted, hollow circle, graphical indicator 330 may, in other examples, include a solid circle, a crosshair, an alteration of a color of the graphical element in interaction area 322 (e.g., darkening or lightening the shades of the colors of the graphical element, using negatives for the colors of the graphical element, etc.), or any other suitable graphical addition to user interface 326B to represent interaction area 322.

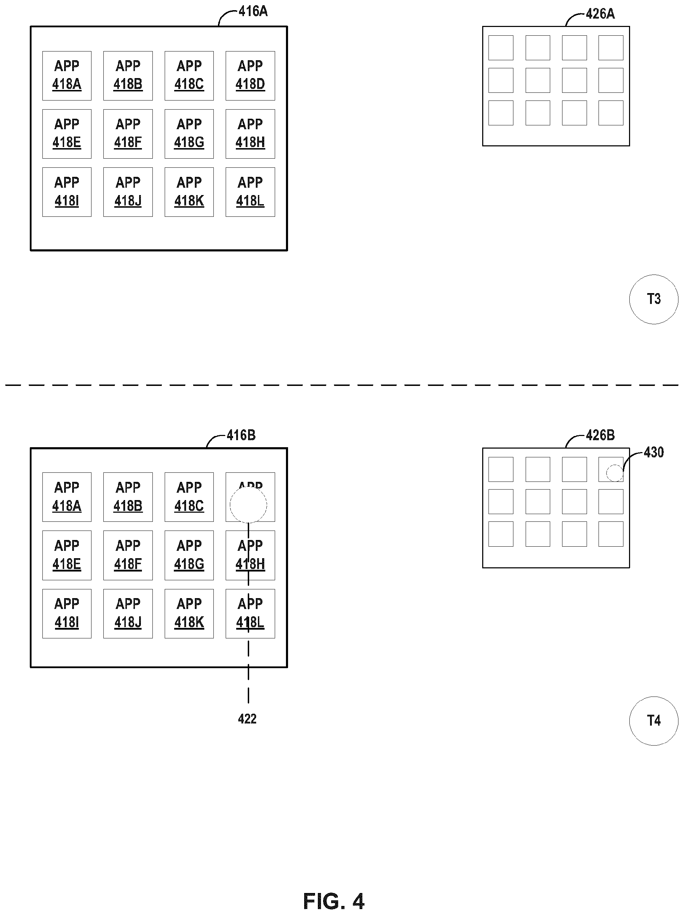

FIG. 4 is a conceptual block diagram illustrating a first display device that receives user interactions and a second display device that mirrors at least a portion of a user interface of the first display device based on a received indication of user interaction, in accordance with one or more aspects of the present disclosure.

In the example of FIG. 4, user interfaces 416A and 416B may be output on a first display device, such as UID 110A of FIG. 1, due to information generated by a computing device, such as computing device 102 of FIG. 1. Further, user interface 426A and 426B may be output on a second display device, such as UID 110B of FIG. 1, due to information generated by a computing device, such as computing device 102 of FIG. 1. The first display device may be a presence-sensitive input/output device, and the second display device may be a heads-up display device separate from the presence-sensitive input/output device. As such, user interface 416A may be an interactive user interface, but located on a device that is unsafe for the user when the user is a driver who would have to take their eyes off of the road to look at user interface 416A. Further, user interfaces 426A and 426B may be output for display at a location that would limit the amount of eye movement required for the user to view user interfaces 426A and 426B, including a dashboard panel or a projection onto the windshield of the vehicle. This would enable the user to precisely navigate user interface 416A without the user having to avert their eyes from the road while navigating their vehicle.

As shown in FIG. 4, at time T3, user interface 416A includes a home screen for an operating system of a computing device, including icons for applications 418A-418L (collectively, "applications 418"). User interface 426A may include the entirety of user interface 416A, albeit at a reduced size due to the reduced size of the second display device as compared to the first display device.

At time T4, the system may receive an indication of user interaction at interaction area 422 of user interface 416B. As shown in FIG. 4, user interface 426B includes user interface 416B, which also includes interaction area 422. Also shown in user interface 426B is graphical indicator 430. Graphical indicator 430 represents interaction area 422 of user interface 416B and is superimposed on top of user interface 426B at a location within user interface 426B that corresponds to interaction area 422 within user interface 416B. As such, when viewing user interface 426B, the user is aware of what would be selected if the user were to separate the input tool from the first display device, if the user were to force the input tool to make contact with the first display device, or if the pressure of the user interaction begins to exceed the threshold pressure value. While shown as a dotted, hollow circle, graphical indicator 430 may, in other examples, include a solid circle, a crosshair, an alteration of a color of the graphical element in interaction area 422 (e.g., darkening or lightening the shades of the colors of the graphical element, using negatives for the colors of the graphical element, etc.), or any other suitable graphical addition to user interface 426B to represent interaction area 422.

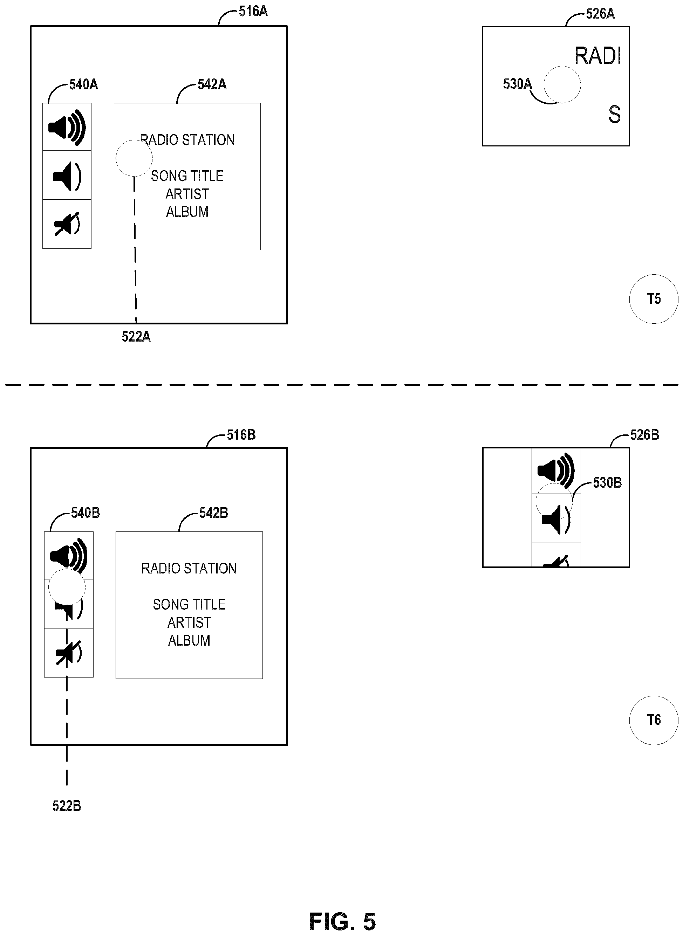

FIG. 5 is a conceptual block diagram illustrating a first display device that receives user interactions and a second display device that mirrors at least a portion of a user interface of the first display device based on a received indication of user interaction, in accordance with one or more aspects of the present disclosure.

In the example of FIG. 5, user interfaces 516A and 516B may be output on a first display device, such as UID 110A of FIG. 1, due to information generated by a computing device, such as computing device 102 of FIG. 1. Further, user interface 526Aand 526B may be output on a second display device, such as UID 110B of FIG. 1, due to information generated by a computing device, such as computing device 102 of FIG. 1. The first display device may be a presence-sensitive input/output device, and the second display device may be a heads-up display device separate from the presence-sensitive input/output device. As such, user interface 516A may be an interactive user interface, but located on a device that is unsafe for the user when the user is a driver who would have to take their eyes off of the road to look at user interface 516A. Further, user interfaces 526A and 526B may be output for display at a location that would limit the amount of eye movement required for the user to view user interfaces 526A and 526B, including a dashboard panel or a projection onto the windshield of the vehicle. This would enable the user to precisely navigate user interface 516A without the user having to avert their eyes from the road while navigating their vehicle.

As shown in FIG. 5, at time T5, user interface 516A includes a user interface within a music playing application, such as a music streaming application or a radio application. Included in user interface 516A are audio adjustment buttons 540A, which include a volume up button, a volume down button, and a mute button. Also included in user interface 516A is music information box 542A, which includes information about the current song and the current artist being played through the music playing application.

At time T5, the user may wish to adjust the volume of the audio output over speakers of the vehicle by the music playing application. As such, the user may attempt to interact with user interface 516A in interaction area 522A. In accordance with the techniques described herein, user interface 526A may include a portion of user interface 516A that includes interaction area 522A. However, due to the user focusing on the road while driving, the initial interaction area 522A falls in music information box 542A of user interface 516A. As such, graphical indicator 530A represents interaction area 522Aand user interface 526A includes interaction area 522A and a surrounding portion of user interface 516A, which includes a portion of music information box 542A.

At time T6, the user may use user interface 526B to attempt to navigate to audio adjustment buttons 540B. As such, one or more processors of the system may detect a movement of an input tool along the interface, either in light contact with the interface or with only a slight separation from the interface, from interaction area 522A to interaction 522B. As shown in FIG. 5, after detection of the movement of the input tool, user interface 526B updates the displayed portion to include graphical indicator 530B that represents the current, new interaction area 522B. User interface 526B now includes audio adjustment buttons 540B, indicating to the user that the interaction area 522B has updated as the input tool moved across the first display device.

Not shown in FIG. 5, while the user moves the input tool along the interface from interaction area 522A to interaction area 522B, user interface 526B may update to dynamically include the current interaction area as the input too moves. This dynamic adjustment may enable the user to efficiently navigate to the desired input location without having to avert their eyes from navigating the vehicle that includes the system of devices described herein.

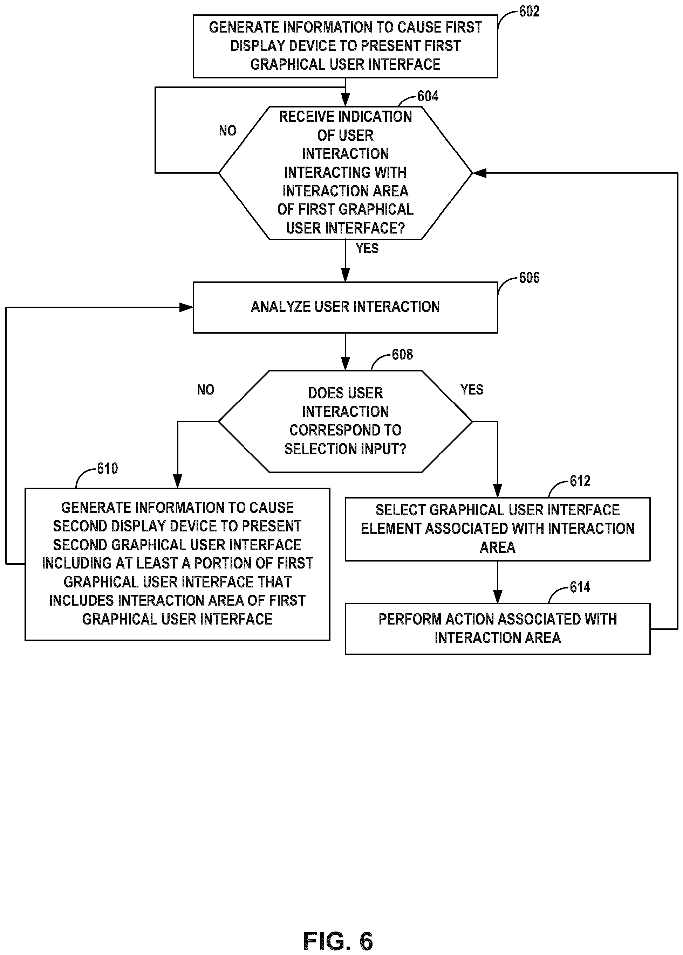

FIG. 6 is a flowchart illustrating example operations of an example vehicle information system that is configured to mirror at least a portion of a user interface from a first display device onto a second display device, in accordance with one or more aspects of the present disclosure. FIG. 6 is described with reference to computing device 102 of FIG. 1. However, this process may also apply to any other computing device described herein.

In accordance with the techniques described herein, computing device 102 may generate information to cause a first display device to present a first graphical user interface (602). Computing device 102 may then determine whether computing device 102 received an indication of user interaction interacting with an interaction area within the first graphical user interface (604). If computing device 102 did not receive an indication of user interaction ("NO" branch of 604), computing device 102 may continue to wait for a user interaction to be received (604). Otherwise, if computing device 102 did receive an indication of user interaction ("YES" branch of 604), computing device 102 may leverage pressure sensors and/or proximity sensors to analyze the user interaction (606).

Using the analysis from block 606, computing device 102 may determine whether the user interaction corresponds to a selection input (608), such as by determining whether a pressure level of the user interaction is above or below a pressure threshold, or whether an input tool controlled by the user is in contact with the interface or if the input tool is close to, but not in contact with, the interface. Responsive to determining that user interaction does not correspond with the selection input ("NO" branch of 608), computing device 102 may generate information to cause a second display device to present a second graphical user interface (610). The second graphical user interface may include at least a portion of the first graphical user interface that includes the interaction area within the first graphical user interface. Computing device 102 may then continue to analyze the user interaction (606), repeatedly generating the information to cause the second display device to present the second graphical user interface so long as the user interaction remains different from the selection input.

Conversely, responsive to determining that the user interaction does correspond to the selection input ("YES" branch of 608), , computing device 102 may select a graphical user face element associated with the interaction area within the first graphical user interface (612). This selection may cause computing device 102 to perform an action associated with the selected interaction area (614). Computing device 102 may then revert back to determining when further user interactions are received (604).

In environments where the first display device is not in a location that is convenient for the user to visually monitor, mirroring at least a portion of the user interface of the first display device on a second display device that may be in a more convenient and safe location for the user to see. For instance, in the example of the passenger vehicle including a touchscreen in the dashboard centerstack, rather than forcing the driver to take their eyes off of the road to look at the touchscreen when the user wants to provide input to the systems controlled by the touchscreen, the user interface may be reproduced on a second display device in a safer location that is also more convenient for the user to look at while they are driving, such as in a heads up display on the dashboard panel or on a projection on the vehicle's windshield in front of the driver. This improved graphical user interface system may improve driver safety, decrease the amount of time it takes for a user to locate graphical elements in the user interface that they wish to interact with, and decrease the amount of errant user interactions provided to the system.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fibre optic cable, twisted pair, digital subscriber line (DSL), or wireless technologies such as infrared, radio, and microwave, then the coaxial cable, fibre optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable gate arrays (FPGAs), complex programmable logic devices (CPLDs), or other equivalent integrated or discrete logic circuitry. Accordingly, the term "processor," as used herein may refer to any of the foregoing structure or any other structure suitable for implementation of the techniques described herein. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be provided by a collection of interoperative hardware units, including one or more processors as described above, in conjunction with suitable software and/or firmware.

Various examples have been described. These and other examples are within the scope of the following claims.

## Claims

1. A device comprising:
means for determining if a user interaction with an interaction area of a first graphical user interface (116) presented by a first display device (110A) corresponds to a selection input; and
means for generating information to cause a second display device (110B) to present a second graphical user interface (126) comprising at least a portion of the first graphical user interface that includes the interaction area within the first graphical user interface in response to determining that user interaction does not correspond to the selection input.

2. The device of claim 1, wherein the user interaction comprises a first user interaction, wherein the interaction area comprises a first interaction area (322), and wherein the device further comprises:
means for receiving an indication of a second user interaction with a second interaction area (330) of the first graphical user interface;
means for determining if the second user interaction corresponds to the selection input; and
means for selecting a graphical user face element associated with the second interaction area (330) within the first graphical user interface (316B) in response to determining that the second user interaction corresponds to the selection input.

3. The device of any of the preceding claims, further comprising:
means for generating information to cause the second display device (316B) to present, in the second graphical user interface (316B), a graphical indicator (330) of the interaction area (322) superimposed on top of the second graphical user interface (326B) at a location within the second graphical user interface (326B) that corresponds to the interaction area (322) within the first graphical user interface (316B) in response to determining that the user interaction does not correspond to the selection input.

4. The device of any of the preceding claims, wherein the interaction area comprises a first interaction area, wherein the portion of the first graphical user interface comprises a first portion of the first graphical user interface, and wherein the device further comprises:
while receiving the indication of the user interaction, and while the user interaction does not correspond to the selection input:
means (222) for receiving an indication of a movement of the user interaction to a second interaction area of the first graphical user interface;
means (224) for generating updated information that causes the second display device to present, in the second graphical user interface, at least a second portion of the first graphical user interface that includes the second interaction area of the first graphical user interface; and
means (224) for generating information to cause the second display device to present, in the second graphical user interface, a graphical indicator superimposed on top of the second graphical user interface at a dynamic location within the second graphical user interface that corresponds to the movement of the user interaction from the first interaction area within the first graphical user interface to the second interaction area within the first graphical user interface in response to determining that the user interaction does not correspond to the selection input.

5. The device of any of the preceding claims, wherein the means for determining if the user interaction corresponds to the selection input comprises:
means (230) for determining a pressure level of the user interaction;
means for determining that the user interaction does not correspond to the selection input in response to determining that the pressure level of the user interaction is less than a pressure threshold level; and
means for determining that the user interaction corresponds to the selection input in response to determining that the pressure level of the user interaction is greater than the pressure threshold level.

6. The device of any of the preceding claims, wherein the means for determining if the user interaction corresponds to the selection input comprises:
means for determining and using one or more proximity sensors (230), if the user interaction is in contact with an input device (212) or hovering above the input device (212);
means for determining that the user interaction does not correspond to the selection input in response to determining that the user interaction is hovering above the input device (212); and
means for determining that the user interaction corresponds to the selection input in response to determining that the user interaction is in contact with the input device (212).

7. The device of any of the preceding claims, comprising
an interface (110); and
one or more processors configured to:
determine if the user interaction with an interaction area of a first graphical user interface presented by a first display device corresponds to a selection input, wherein the user interaction is received by the interface; and
responsive to determining that user interaction does not correspond to the selection input, generate the information to cause the second display device to present a second graphical user interface comprising at least a portion of the first graphical user interface that includes the interaction area within the first graphical user interface.

8. The device of claim 7, wherein the user interaction comprises a first user interaction, wherein the interaction area comprises a first interaction area, and wherein the one or more processors are further configured to:
receive an indication of a second user interaction with a second interaction area of the first graphical user interface;
determine if the second user interaction corresponds to the selection input; and
responsive to determining that the second user interaction corresponds to the selection input, select a graphical user face element associated with the second interaction area within the first graphical user interface.

9. The device of claim 7, wherein the one or more processors are further configured to:
responsive to determining that the user interaction does not correspond to the selection input, generating, by the one or more processors, information to cause the second display device to present, in the second graphical user interface, a graphical indicator of the interaction area superimposed on top of the second graphical user interface at a location within the second graphical user interface that corresponds to the interaction area within the first graphical user interface.

10. A method comprising:
determining if a user interaction with an interaction area of a first graphical user interface presented by a first display device corresponds to a selection input; and
responsive to determining that user interaction does not correspond to the selection input, generating information to cause a second display device to present a second graphical user interface comprising at least a portion of the first graphical user interface that includes the interaction area within the first graphical user interface.

11. The method of claim 10, wherein the user interaction comprises a first user interaction, wherein the interaction area comprises a first interaction area, and wherein the method further comprises:
receiving an indication of a second user interaction with a second interaction area of the first graphical user interface;
determining if the second user interaction corresponds to the selection input; and
responsive to determining that the second user interaction corresponds to the selection input, selecting a graphical user face element associated with the second interaction area within the first graphical user interface.

12. The method of claim 10, further comprising: responsive to determining that the user interaction does not correspond to the selection input, generating information to cause the second display device to present, in the second graphical user interface, a graphical indicator of the interaction area superimposed on top of the second graphical user interface at a location within the second graphical user interface that corresponds to the interaction area within the first graphical user interface.

13. The method of any of claims 10-12, wherein the interaction area comprises a first interaction area, wherein the portion of the first graphical user interface comprises a first portion of the first graphical user interface, and wherein the method further comprises:
while receiving the indication of the user interaction, and while the user interaction does not correspond to the selection input:
receiving an indication of a movement of the user interaction to a second interaction area of the first graphical user interface;
generating updated information that causes the second display device to present, in the second graphical user interface, at least a second portion of the first graphical user interface that includes the second interaction area of the first graphical user interface; and
responsive to determining that the user interaction does not correspond to the selection input, generating information to cause the second display device to present, in the second graphical user interface, a graphical indicator superimposed on top of the second graphical user interface at a dynamic location within the second graphical user interface that corresponds to the movement of the user interaction from the first interaction area within the first graphical user interface to the second interaction area within the first graphical user interface.

14. The method of any of claims 10-13, wherein determining if the user interaction corresponds to the selection input comprises:
determining a pressure level of the user interaction;
responsive to determining that the pressure level of the user interaction is less than a pressure threshold level, determining that the user interaction does not correspond to the selection input; and
responsive to determining that the pressure level of the user interaction is greater than the pressure threshold level, determining that the user interaction corresponds to the selection input.

15. The method of any of claims 10-13, wherein determining if the user interaction corresponds to the selection input comprises:
determining and using one or more proximity sensors, if the user interaction is in contact with an input device or hovering above the input device;
responsive to determining that the user interaction is hovering above the input device, determining that the user interaction does not correspond to the selection input; and
responsive to determining that the user interaction is in contact with the input device, determining that the user interaction corresponds to the selection input.
